# EUROPEAN PATENT APPLICATION

(11) **EP 1 076 473 A1**
(43) Date of publication of application: **14.02.2001**
(21) Application number: 99810725.4
(22) Date of filing: 11.08.1999
(51) Int. Cl.: H04Q 11/04, H04Q 3/66

(54) **Method and a network node for selectively transferring data to multiple networks**

(71) Applicant: Inalp Networks AG, 3172 Niederwangen (CH)
(72) Inventor: Felder, Ramon, 3097 Liebefeld (CH); Egli, Peter, 8051 Zürich (CH); Born, Lorenz, 3006 Bern (CH); Greutert, Jonas, 4412 Nuglar (CH)
(74) Representative: Patentanwälte Schaad, Balass, Menzl & Partner AG

(57) **Abstract**

The method and the network node allow the transfer of data from at least a first circuit switching network (ISDN) and/or a first packet switching network to multiple networks which comprise at least a second circuit switching network (ISDN) and at least a second packet switching network. A call routing module (CRM) compares setup information of an incoming service call of the first or second networks with a predetermined routing profile and selects an address or a carrier (n) in a network to which the service call is to be routed and, according to the result of the routing selection,
- a circuit switch (CS) switches a service call incoming from the first or the second circuit switching network either to the second respective first circuit switching network or over a gateway (GW) to the first or to the second packet switching network and
- a packet routing unit (PRU) routes the data packets of a service call incoming from the first or the second packet switching network either to the second respective first packet switching network or over a gateway (GW) and the circuit switch (CS) to the first or to the second circuit switching network.

## Description

The present invention relates to a method and a network node for selectively transferring data to multiple networks according to claim 1 respective claim 8.

### BACKGROUND OF THE INVENTION

Telecommunication equipment at a customer's premises (Customer Premises Equipment CPE) comprises besides voice and data terminals (telephones, fax devices, modems, etc.) often a private branch exchange PBX. Customer Premises Equipment CPE can be connected over network terminating devices to a telecommunication network such as the Integrated Services Digital Network ISDN. A computer network (LAN) may in addition be connected to a wide area data network (such as the Internet) through a fixed access or dial up connection.

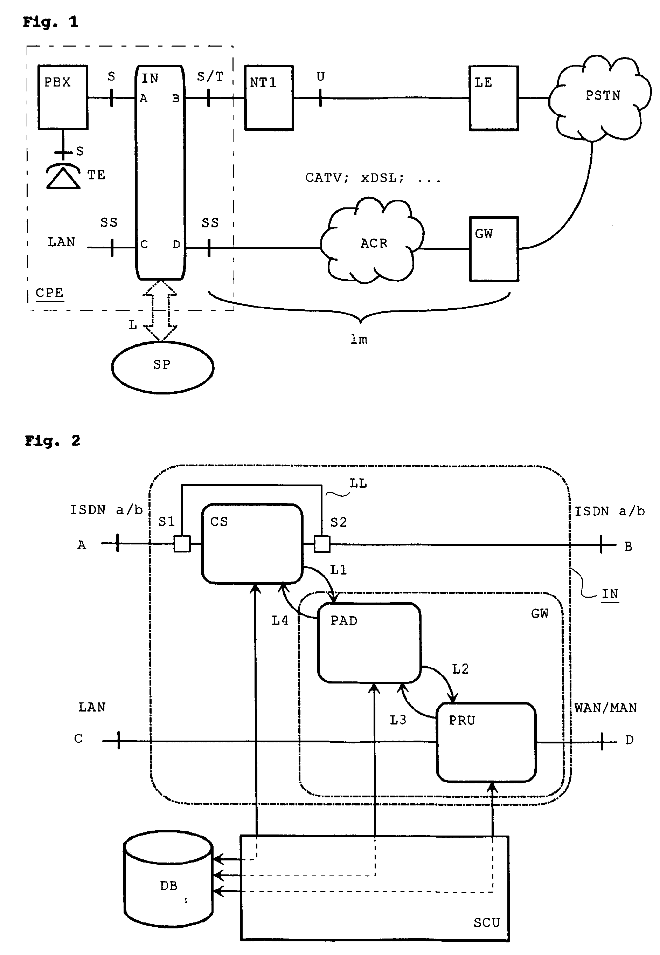

The Integrated Services Digital Network ISDN comprises terminating devices NT1, NT2 (see [1], Andrew S. Tanenbaum, Computer Networks, Prentice-Hall Inc., New Jersey 1989, page 97, Fig. 2-25 (b) and page 98). The terminating device NT2, which is often the above mentioned private branch exchange (PBX), allows the connection of several terminals TE1; TE2 to the terminating device NT1. The terminating device NT1, which is capable to perform network administration (address management, access control, etc. ), local and remote loop-back testing, maintenance and performance monitoring, is often installed at the customer's premises and connected over the access network to the carrier central office (CO), e.g. the local telephone exchange, which may be several kilometres away (see Fig. 1, bracket lm which indicates the last mile(s)).

The access networks may contain different transmission media which are used to transfer the raw data stream between the customer's and the carrier's equipment. Known transmission media are e.g. a twisted pair of copper wires, a baseband coaxial cable, a broadband coaxial cable or fibres for the optical data transmission (see [1], pages 57-65 and [2], Peter Bocker, ISDN-Digitale Netze für Sprach-, Text, Daten-, Video- und Multimediakommunikation, Springer Verlag, Berlin 1997, pages 246-247). Possible is the data transmission over CATV (cable tv) lines (coaxial cables or fibres), over the Power Line or wireless equipment (GSM, Radio in the Loop (RITL). Data may also be transferred over one transmission medium under different services. E.g., a customer may have access to the Internet or Internet Protocol (IP) based networks (IP networks) over the telephone line and/or the CATV connection. Cable TV uses often Hybrid Fibre Coax (HFC) networks for signal transmission. Fibres are used to cover greater distances and improve signal quality.

Transmission cost, reliability and transmission capabilities of said transmission media vary in a considerable range and often depend on time and date. The costs for the use of said transmission media depend on the conditions provided by the proprietor of the transmission media and are often influenced by legal regulations.

Quality, customer service and service transparency are of fundamental importance. Besides that also the cost of the provided services may not be neglected.

Cost of a long distance connection between two customers comprises therefore the cost for the connection over the access network and the cost for the connection over the wide area network. Due to the price differences of the services of wide area carriers a customer or an Access Provider such as a so called competitive local exchange carrier (CLEC), which offers his service to customers in competition to incumbent service providers, will choose the wide area carrier which offers the services with the required quality at the lowest price. Due to the competitive situation, market conditions may change within short terms.

Cost for the connection over the access network, which is often controlled by an incumbent service provider, is of importance since the change to a different wide area carrier via a competitive local exchange carrier (CLEC) may result in lower costs for the wide area connection and higher costs for the connection over the access network so that in total the benefit of the change to a different wide area carrier does not justify the administrative effort.

In addition a customer can normally not accept the change of it's phone number when changing to a different service provider. Number portability is therefore an important issue.

Further it is important that the customer has guaranteed access to the communication network whenever needed.

The described problem of selecting a suitable transmission channel is also of importance for an access provider which utilises networking equipment and terminals on his premises.

The present invention is therefore based on the object of specifying a method and a network node for selectively transferring data from the premises equipment of a customer or an access provider over available transmission media and therein embedded transmission channels of an access network.

### SUMMARY OF THE INVENTION

The above and other objects of the present invention are achieved by a method and an network node which allow the centralised transfer of data from a network on one side (e.g. a network within the customer premises or at a carriers central office) over multiple networks (e.g. over selected transmission media and therein embedded transmission channels of an access network or accessible wide area networks), which comprise at least one connection oriented network and one connectionless network.

IP networks are connectionless networks in which packets sent from a source do not necessarily follow the same path. They can be sent over different routes from source to destination.

The ISDN on the contrary is a connection oriented network (often called a circuit switched network (SCN)). The essential feature in a connection oriented network is that a sequence of virtual circuits is set up from the source through one or more network nodes to the destination. Each network node maintains tables telling which virtual circuits pass through it, were they are to be routed and what the new virtual circuit number is (see [1], pages 338-346).

The inventive network node may preferably connect on the one hand the internal networks available on the customer premises such as a telephone network and a local area network and on the other hand an external access network comprising the networks (e.g. telephone (access) network, CATV-network, Internet respective IP Networks, wireless systems, etc.) to which the customer has access. The network node adapts and switches the incoming and outgoing data between the connected lines according to instructions stored in a local or remote database. Outgoing calls from the customer's private branch exchange PBX can therefore be routed via a preferred network (e.g. the incumbent telephone access providers network or the CATV network) to the equipment of a competitive local exchange carrier (CLEC) from where it will be switched to a preferred wide area network.

The inventive method allows selection of a preferred access carrier and wide area carrier while maintaining number portability and life line support which enables the customer to send or receive a call over a by-pass circuit in case of a break-down of the network node which may be caused by a power failure.

The inventive call routing function advantageously allows to select a carrier based on static parameters such as called or calling party number as well as dynamic parameters such as status of the network, cost, available and required bandwidth, etc..

The inventive network node can however also be integrated between the available access and wide area networks at the service providers site.

### BRIEF DESCRIPTION OF THE DRAWINGS

Some of the objects and advantages of the present invention have been stated, others will appear when the following description is considered together with the accompanying drawings, in which:
Fig. 1 shows an inventive network node IN which connects customer premises equipment CPE to an access network which provides access to the public switched telephone network PSTN over a telephone line and an alternative transmission medium such as a CATV fibre;
Fig. 2 shows the inventive network node IN in a preferred embodiment;
Fig. 3 shows the inventive network node IN which connects customer premises equipment CPE to the public switched telephone network PSTN and to an Internet access provider;
Fig. 4 shows two inventive network nodes IN1, IN2 on the customer side and one inventive network node IN3 integrated into the access network;
Fig. 5 shows an inventive network node IN which is controlled by a service provider SP;
Fig. 6 shows the elements of the routing selection procedure;
Fig. 7 shows the routing selection procedure in detail;
Fig. 8 shows an inventive network node IN being connected over multiple physical or virtual access lines with carrier networks A, B and C;
Fig. 9 shows m inventive network nodes IN1, ..., Inm which are managed by a service provider;
Fig. 10 shows an inventive network node in a principal layout and
Fig. 11 shows the network node of Fig. 2 in layout according to Fig. 10.

### DETAILED DESCRIPTION OF THE PREFERRED EMBODIMENTS

Fig. 1 shows an inventive network node IN which connects customer premises equipment over access lines to multiple carrier backbones at a carriers central office (CO). The network node IN comprises four ports, one port A (PBX port) which is connected over a reference point S to the customer's private branch exchange PBX which provides access to terminals TE. A further port C (LAN port) is connected to the local area network LAN of the customer. Port C is only required in case that a local area network LAN is available. Port B (PSTN port) on the carrier side is connected over the incumbent access network respective a network termination device NT1 (see reference points S/T and U), a telephone line and a local exchange LE to the public switched telephone network PSTN. Port D (WAN port), also on the carrier side, is connected over an alternative carrier ACR and a gateway GW to the public switched telephone network PSTN. The alternative carrier may be a CATV provider which distributes broadcasted signals or provides interactive services over hybrid fibre coax (HFC) networks. Over these access systems the customer may transfer data to a gateway GW which connects the network of the CATV provider to the public switched telephone network PSTN. The network IN node can be connected to the service provider SP such as a competitive local exchange carrier (CLEC) through any of the network connections (see logical link L). The network node allows the customer now to bypass the incumbent access network (between port B and the PSTN) via the alternative access network (between port D and the gateway GW) as will be described below. The ports A, B, C and D of the network node can be configured according to the specifications of the connected networks.

The networks connected to ports A and B are circuit switching networks. The networks connected to ports C and D are packet switching networks (see [1], page 87, Fig. 2-21 and page 105). In the circuit switching scenario the ISDN customer calls up the destination and uses a 64-kbps channel as a data link layer connection for transmitting digitised voice or other data. The entire 64-kbps channel is dedicated to the call throughout it's duration. The charge will therefore typically be proportional to the duration of the call, but not to the volume of data sent. The packet switched traffic however may be charged depending on the volume of data sent.

The inventive network node IN, which is shown in Fig. 2 in a preferred embodiment, comprises a circuit switch CS which, through bi-directional data channels, connects port A either to port B or over an packet assembler dissembler PAD and a packet routing unit PRU to port D. The packet routing unit PRU is designed to handle and switch packet switched traffic which is transferred between port D and ports A and C. Circuit switched traffic has therefore to be converted into packet switched traffic by the packet assembler dissembler PAD and the packet routing unit PRU and vice versa. Conversion of circuit switched traffic into packet switched traffic is done in the packet assembler dissembler PAD according to a gateway protocol which allows data adaptation between the corresponding networks. The ITU-T H.323 protocol for example allows to route calls between ISDN networks and IP networks.

If a call is made from the local phone network connected to port A a call routing module CRM, which has access to a database DB, decides whether the outgoing call has to be routed over port A or D. If the call is to be routed via port D the circuit switch CS is instructed to forward the ISDN data stream (see [1], page 105, Fig. 2-31) over data link L1 to the packet assembler dissembler PAD, which translates the incoming data stream into discrete data packets. In addition the packet assembler dissembler PAD can apply known compression and decompression procedures according to given instructions. A pulscode modulated voice signal is therefore translated by the packet assembler dissembler PAD into sequences of data words, which correspond to the original data and the applied compression procedure. The created data packets are then forwarded from the packet assembler dissembler PAD over the data link L2 to the packet routing unit PRU which inserts the data packets into the packet stream which is outgoing over port D. The packet routing unit PRU will also provide quality of service (QoS) scheduling for the (ISDN) data packets which are typically given priority over data packets arriving from port C (LAN port).

If a call, incoming from the packet switching network arrives at port D, the packet routing unit PRU extracts the corresponding data packets from the packet stream and forwards them over data link L3 to the packet assembler dissembler PAD which extracts the data from the received packets. The extracted data is decompressed if required and converted according to a given gateway protocol and transferred within an ISDN data stream over data link L4 and the circuit switch CS to port A.

The call received at port D may come in from the IP network and therefore be based on a so called Voice over IP (VoIP) protocol such as ITU-T H.323 which utilises i.a. ITU-T H.245 facilities control and ITU-T H.225 and Q.931 call signalling and control protocols. Using other methods for transferring data from the telecommunication network over IP network is also possible. Conversion based on said protocol (e.g. ITU-T H.323) is again done by the packet assembler dissembler PAD.

The packet assembler dissembler PAD forms therefore a gateway which performs the network transition between the packet switching network WAN and the circuit switching network ISDN. The system control unit SCU further provides translation functions between Voice/Data over IP conferencing endpoints and ISDN compliant endpoints in both directions.

The packet routing unit PRU further routes packets from the customers local area network LAN (port C) to the access of the wide area network (port (D).

The circuit switch CS can forward an outgoing call from port A via port B directly to the public switched telephone network PSTN. In case of a failure of the network node IN or the power supply a by pass circuit (wire LL and switches Sl, S2) is activated in order to bridge (hardwire) ports A and B. The bypass circuit is part of a life line system which ensures that in case of a power failure a telephone line remains available to the customer. The customer premises telephone equipment is in such an emergency case directly to the network termination device NT1 connected, which normally provides a supply voltage.

The circuit switch CS will forward a call from the public switched telephone network PSTN from port B directly to port A. The customer can therefore always be reached through his initial phone number.

Though the described transitions for the traffic between ports A, B, A, D and C, D may be of prime interest, in a preferred embodiment of the invention it is also possible to route data between ports B (PSTN) and C (LAN). In certain cases transitions between ports A (CPE) and C (LAN) or B (PSTN) and D (WAN) will also provide a benefit to a customer. The transition between ports A (CPE) and C (LAN) allows the connection of the local area network to the private branch exchange PBX and the transition between ports B (PSTN) and D (WAN) allows to route external data and calls, e.g. originating from a related office, over the network node IN to a preferred carrier. Since all of these additional transitions (A← →C, B← →D and B← →C require the gateway functions provided by the packet assembler dissembler PAD and the packet routing unit PRU as described above said transitions can be realised in the same way. In addition the call routing information in the database DB has to be extendend accordingly.

It is further possible to increase the number of ports A, B, C, D, E, ... and gateway modules GW, GW2, ... as required. E.g., port D may provide access to a cable tv network and port E may provide access to a digital subscriber line (see [2], page 247; DSL, HDSL, ADSL) or to a wireless communication channel.

Since all traffic between the customer premises equipment CPE (ports A and C) and the access network is routed over the inventive network node a provider may easily obtain all accounting information from provided services from the database DB of the network node. The system control unit SCU may perform call detail record (CDR) for the circuit and packet switched traffic in order to track Call Type, Time, Duration, Facilities used, Originator, Destination, etc. Recorded call details are then stored in the database DB.

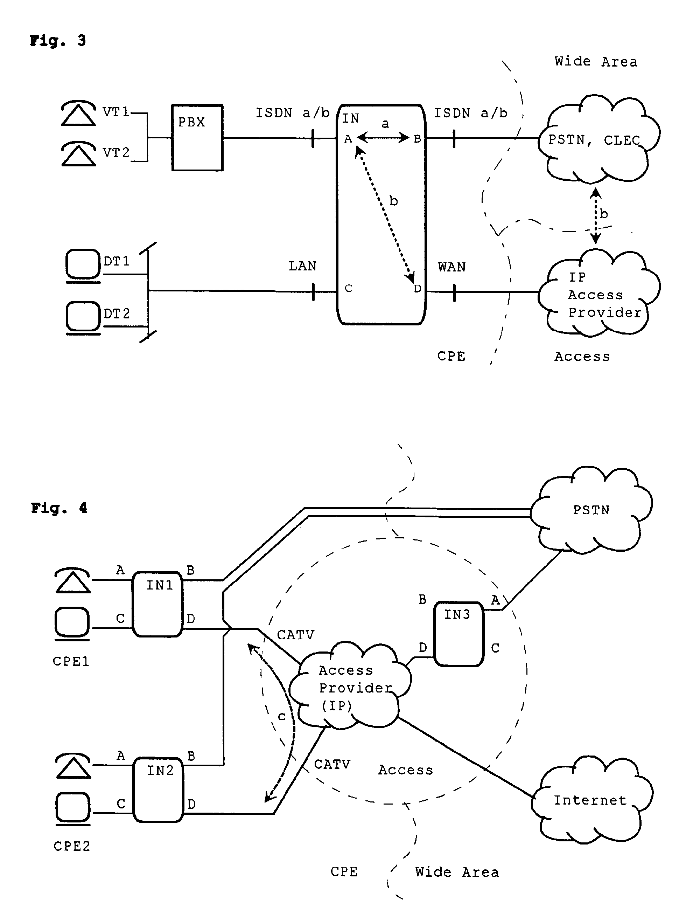

Fig. 3 shows the inventive network node IN which connects customer premises equipment (a private branch exchange PBX with voice terminals VT1, VT2 and data terminals DT1, DT2) to the public switched telephone network PSTN and to an Internet access provider. The network node has switched two calls, the first call (a) between ports A and B and the second call (b) between ports A and D. The second call is routed over the IP access network to the public switched telephone network PSTN.

Fig. 4 shows two inventive network nodes IN1, IN2 installed at different customer premises CPE1 and CPE2 and one inventive network node IN3 integrated into the access network. The network nodes IN1 and IN2 of customer premises equipments CPE1 and CPE2, which are installed as shown in Fig. 3, are connected (starting from port D) over the cable tv access network CATV with an Internet access provider who is connected over the network node IN3 with the public switched telephone network PSTN. The network node IN3 acts as a gateway between the providers network (normally the access network) and the public switched telephone network PSTN. The network node IN3 can perform additional functions if required.

Since transmission costs over the cable tv access network CATV are low and the available bandwidth is high the customer premises equipments CPE1 and CPE2 communicate preferably over the cable tv access network CATV and not over the public switched telephone network PSTN or the IP network. However an increasing number of subscribers poses also a problem to users of the so far described network nodes IN since the change of subscribers must be registered in the database DB which contains the routing data. Without regular updates routing may fail completely, e.g. in case where a subscriber has changed the provider. Since the routing data are available at the access service provider, e.g. the proprietor of the cable-tv access network CATV, the described problem can be solved by the provider offering an additional service for the customer premises equipments CPE1 and CPE2 as described below.

In addition to routing information also configuration and accounting information (fees/tariffs) can be downloaded to the customer's database DB. Registered user data and recorded accounting data on the other hand can be looked up by the service provider.

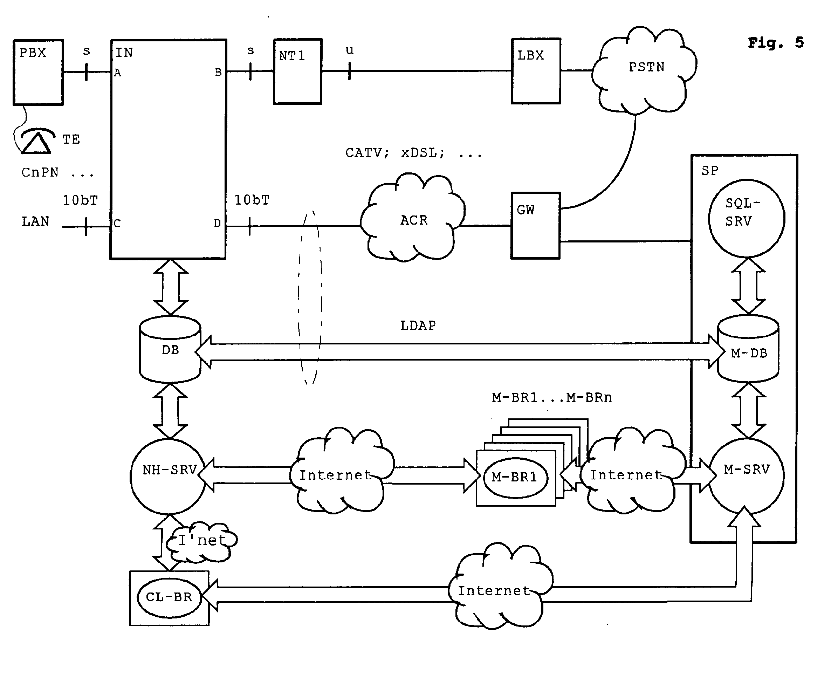

Fig. 5 shows an inventive network node IN which is controlled by a service provider SP using a management system comprising management interfaces to the customer's and the service provider's equipment.

The first, web based management interface NH-SRV enables provider and customer over web-browsers CL-BR; , M-BR1, ..., M-BRn to log into the network node IN and see and configure specific parameters. The customer will be able to read and change only the parameters assigned to him by the provider. A web based management interface M-SRV is also used which can be accessed by the customer and the provider to access and configure the central database M-DB.

The further management interface, which is located between the network nodes IN installed on the customer side and the central database M-DB uses an access protocol, preferably the Lightweight Directory Access Protocol LDAP, to synchronise the local databases DB on the customer side with the central database M-DB. In order to keep the central management application simple, synchronisation is preferably done in a pull-mode. Accordingly network nodes periodically request updates from the central database M-DB.

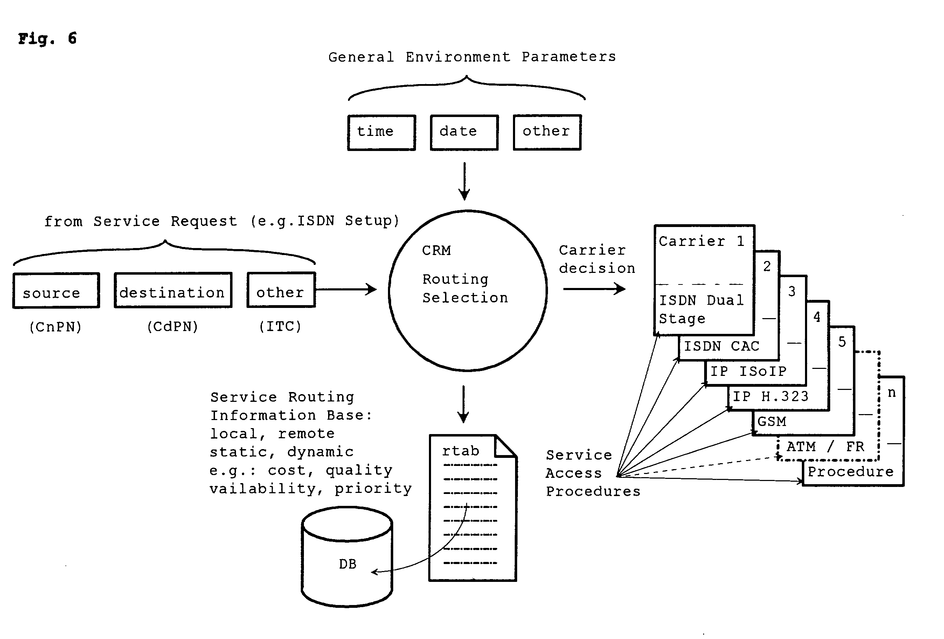

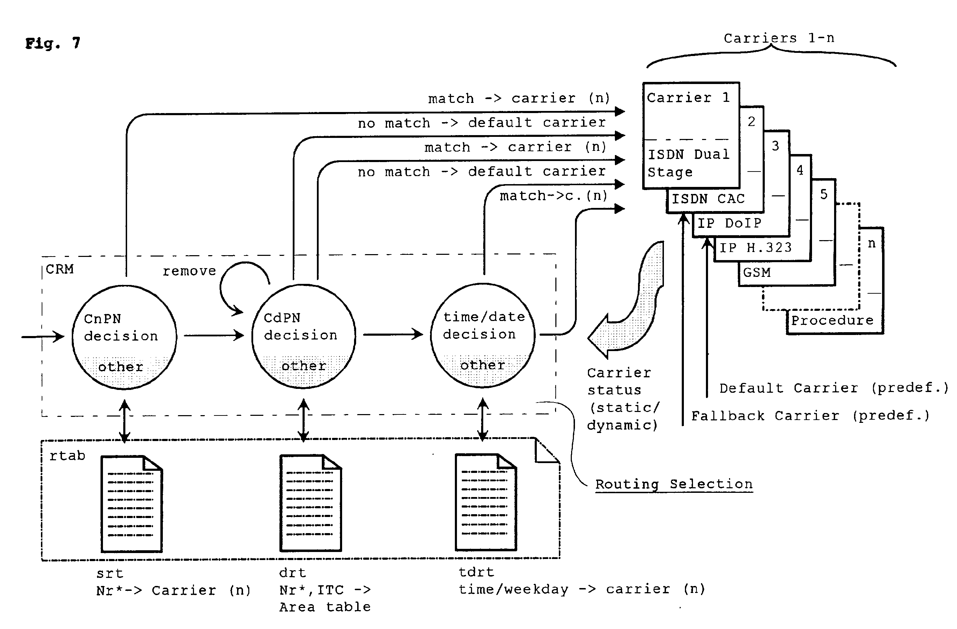

A preferred routing selection procedure for the network nodes IN is shown in Fig. 6 and Fig. 7. The basic procedure is shown in Fig. 6. Routing selection is done by a call routing module CRM (ISDN routing selection) which is preferably located in the system control unit SCU of the network node IN. The call routing module CRM has access to the ISDN setup information of the outgoing calls, to the system information of the system control unit SCU and to a routing selection table rtab which contains the routing profile. The calling party number CnPN, the called party number CdPN and other information (e.g. information transfer capability ITC) is extracted from the ISDN setup information. The system control unit SCU provides time and date and other parameters such as static and dynamic carrier information (available bandwidth, cost availability, quality of service). Based on said information the call routing module CRM will look up a suitable route in the routing selection table rtab and select a corresponding carrier (carrier 1, ..., n).

The access procedure for each carrier is defined separately. In this way the call routing module's CRM routing decision is independent of the actual call establishment which may be, call by call, over ISDN, IP, GSM, Frame Relay, ATM, etc.. One carrier (see Fig. 7, carrier 3) is chosen as default carrier. Another carrier (see Fig. 7, carrier 2) is chosen as fall back carrier. The fall back sequence is therefore: selected carrier → default carrier → fall back carrier. Of course the selected carrier may also be the default or the fall back carrier, which shortens the fall back sequence accordingly. The fall back carrier is preferably set to the most reliable choice, i.e. the incumbent ISDN access provider.

As shown in Fig. 7 the routing selection table rtab is split into three sub-tables, a source routing table srt containing calling party numbers, a destination routing table drt containing called party numbers and Information Transfer Capabilities (UD64, speech, audio 3.1, audio 7.1) and a time and date routing table tdrt, which is a subtable to the destination routing table drt.

The separation of the destination routing table drt and the time and date routing table tdrt allows the service provider to divide all destinations into geographical regions (e.g. North America, Europe, Far East) and have a separate time/day decision for each region. In this way the number of table entries is reduced without loosing much granularity. If instead all criteria are combined in one table, there will be multiple entries for each destination, e.g. for 0049*:

**table 1**

| | | | | |
|---|---|---|---|---|
| 0049* | 08.00-17.00 | monday-friday | → | carrier 3 |
| 0049* | 17.00-23.00 | monday-friday | → | carrier 5 |
| 0049* | 23.00-08.00 | monday-friday | → | carrier 1 |
| 0049* | 00.00-24.00 | saturday-sunday | → | carrier 2 |

In the call routing module CRM the last n digits of the calling party number are matched against the entries in the source routing table srt. The best match returns the routing decision respective the carrier to be selected.

If there is no match the first n digits of the called number are matched against the entries in the destination routing table drt. The best match returns the routing decision. This may be the carrier to be selected or the decision to look-up the entries in the time and date routing table tdrt. If there is no match the default carrier is selected. In addition the Information Transfer Capability contained in the setup information can be matched against a corresponding entry in the destination routing table drt.

In the time and date routing table tdrt, which is a sub table to the destination routing table drt, the system time and date are compared with the time intervals registered as listed in table 1 above. If there is no match the default carrier is selected.

Comparing the last part of the source address with the entries of a source routing table (rtab; srt) respective the first part of the destination address with the entries of a destination routing table (rtab; drt) is the shortest way to find a correct match in the search tree. However since address formats may change the call routing module will always compare the significant part of a source or destination address

Besides this preferred routing method it is also possible to exchange or skip some of the routing procedures. Routing decisions can be provided for circuit and packet switched traffic. A carrier is therefore selected according to at least one of the following steps which can be interchanged:
- selecting a carrier (n)corresponding to the source address by comparing the significant part of the source address with the entries of a source routing table (rtab; srt),
- selecting a carrier (n) corresponding to the destination address by comparing the significant part of the destination address with the entries of a destination routing table (rtab; drt),
- selecting a carrier (n)corresponding to the source address or destination address according to time and/or date of the service call,
- selecting a carrier (n)corresponding to the source address or destination address and/or time and/or date while other parameters demanded in the service call such as requested bandwidth or quality of service are compared with the static and/or dynamic network conditions such as available bandwidth or the status of the carriers.

Since two calls carrying the same call reference can enter the network node over ports B (PSTN port) and D (WAN port), a call reference mapping can be provided, in order to provide an unambiguous call reference to the private branch exchange at port A. E.g., a call reference X of a call incoming at port B may be mapped to XB while the same call reference X of a call incoming at port D may be mapped to XD.

As explained above the inventive network node can be modified according to the needs of the customers. It is possible to add input or output ports in order to gain flexibility. In case that a customer does not have a local area network, port C (LAN port) is not required. Use of the network node with circuit and packet switching networks which are based on different communication protocols requires adaptation by a man skilled in the art.

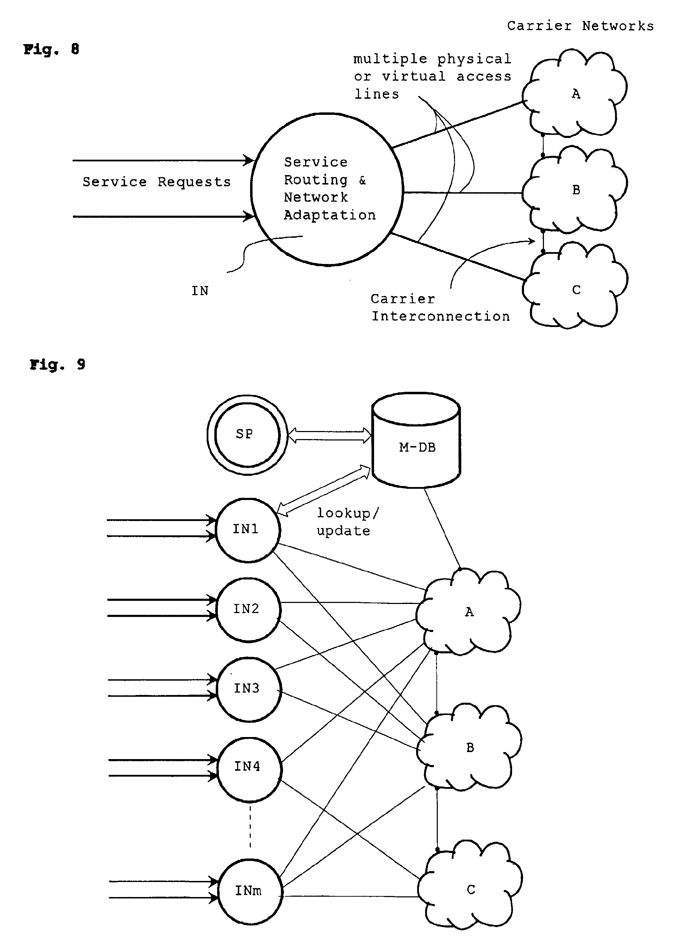

Figures 8-10 show the full capability of the inventive network node IN.

Fig. 8 shows an inventive network node IN being connected over multiple physical or virtual access lines with carrier networks A, B and C. The inventive network node can handle numerous incoming service requests (not only voice calls) and establish connections over available physical or logical access lines connections to said carrier networks A, B and C.

Fig. 9 shows m inventive network nodes IN1, ..., Inm which are managed and controlled by a service provider SP. Each network node IN1, ..., Inm has access to the service providers database in order to perform updates or lookups. The service provider SP collect accounting data from all network nodes IN1, ..., Inm in order to perform a centralised billing for all traffic routed.

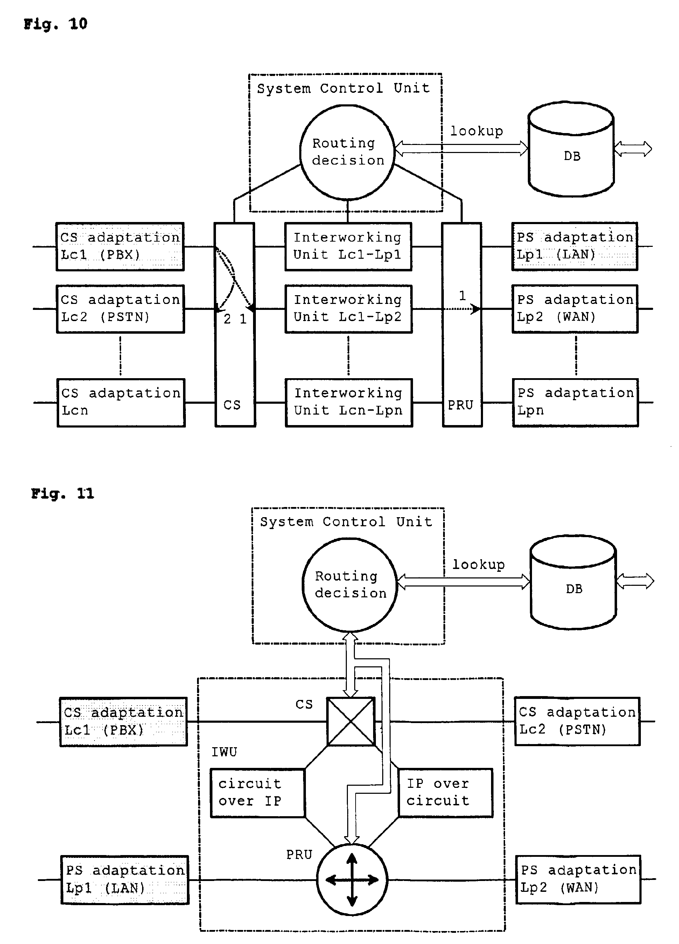

Fig. 10 shows an inventive network node in a principal layout with n input lines Lc1, ..., Lcn for circuit switched traffic and n input lines Lp1, ..., Lpn for packet switched traffic which are connected over adaptation units to the circuit switch CS respective to the packet routing unit PRU. Input lines Lcl and Lpl are connected to the customer premises equipment CPE and input lines Lc2 and Lp2 are connected to the wide area and public switched telephone network WAN; PSTN. The circuit switch CS and the packet routing unit PRU are connected over interworking units (such as the packet assembler dissembler PAD of Fig. 2) which perform functions according to a given gateway protocol. As indicated the network node has switched a first call (1) from the PBX of the customer premises to the wide area network and a second call (2) to the public switched telephone network PSTN.

Fig. 11 shows the network node of Fig. 2 in layout according to Fig. 10. It can be seen that the circuit switch CS and the packet routing unit PRU are controlled by the system control unit SCU. The interworking unit provides data conversion according to a circuit over IP respective IP over circuit protocol.

The inventive network node, which is not restricted to the transfer of voice calls, is able to handle all service calls and to perform adaption, conversion and transfer of all involved data.
[1] Andrew S. Tanenbaum, Computer Networks, Prentice-Hall Inc., New Jersey 1989
[2] Peter Bocker, ISDN-Digitale Netze für Sprach-, Text, Daten-, Video- und Multimediakommunikation, Springer Verlag, Berlin 1997

## Claims

1. A method for selectively transferring data in a network node (IN; IN1, IN2, IN3) from at least a first circuit switching network (ISDN) and/or a first packet switching network to multiple networks which comprise at least a second circuit switching network (ISDN) and at least a second packet switching network characterised in that a call routing module (CRM) compares setup information of a service call incoming from the first or second networks with a predetermined routing profile and selects an address or a carrier (n) in a network to which the service call is to be routed and, according to the result of the routing selection,
- a circuit switch (CS) switches a service call incoming from the first or the second circuit switching network either to the second respective first circuit switching network or over an interworking unit (IWU) to the first or to the second packet switching network and
- a packet routing unit (PRU) routes the data packets of a service call incoming from the first or the second packet switching network either to the second respective first packet switching network or over an interworking unit (IWU) and the circuit switch (CS) to the first or to the second circuit switching network.

2. Method according to claim 1, in which
the first networks are
- networks located at customer premises respective
- access networks connecting customer premises equipment (CPE) with at least one carrier central office and
the second networks are
- access networks connecting customer premises equipment (CPE) with at least one carrier central office respective
- wide area networks (WAN) or public switched telephone networks (PSTN).

3. Method according to claim 1 or 2, in which
- service calls to be forward from a circuit switching network to a packet switching network are passed on to the interworking unit (IWU) comprising a packet assembler dissembler (PAD), which transforms the switched data stream into a corresponding sequence of data packets which are passed on to a packet routing unit (PRU) which inserts said packets into a packet stream passing to said packet switching network.
- data packets of service calls to be forward from a packet switching network to a circuit switching network are extracted out of the packet stream by the packet routing unit (PRU) and passed on to the packet assembler dissembler (PAD) which transforms the arriving sequence of data packets into a continuous data stream which is forwarded over the circuit switch (CS) to said circuit switching network.

4. Method according to one of the claims 1-3, in which the call routing module (CRM) selects a carrier (n) according to at least one of the following steps in such a way
- that a carrier (n)corresponding to the source address is selected by comparing the significant part of the source address with the entries of a source routing table (rtab; srt),
- that a carrier (n) corresponding to the destination address is selected by comparing the significant part of the destination address with the entries of a destination routing table (rtab; drt),
- that a carrier (n)corresponding to the source address or destination address is selected according to time and/or date of the service call,
- that a carrier (n)corresponding to the source address or destination address and/or time and/or date is selected while other parameters demanded in the service call such as requested bandwidth or quality of service are compared with the static and/or dynamic network conditions such as available bandwidth or the status of the carriers.

5. Method according to one of the claims 1-4, in which service calls routed between the circuit switching networks and the packet switching networks are transferred according to a protocol, being implemented in the interworking unit (IWU), which allows the transfer of signalling and control data of the circuit switched traffic over the packet switching network.

6. Method according to claim 5, in which the circuit switching network is an Integrated Services Digital Network (ISDN) and the packet switching network is an Internet Protocol based network and the protocol is specified in ITU-T recommendation H.323.

7. Method according to one of the claims 1 to 6, in which the routing profile stored in a database (DB) accessible by the network node (IN; IN1, IN2, IN3) is controlled by a service provider (SP) in such a way that
- the database (DB) is accessed by the service provider (SP) over at least one carrier (n) of the access network in order to change or read the routing profile or characteristic data belonging to the customer premises equipment (CPE) whenever required;
- the service provider (SP) maintains a master database (M-DB) containing routing profiles specific or general for the customers and that
- the network node (IN; IN1, IN2, IN3) regularly accesses the master database (M-DB) in order to download update information for its database (DB).

8. A network node (IN, IN1, IN2, IN3) according to the method of claim 1 for selectively transferring data from at least a first circuit switching network (ISDN) and/or a first packet switching network to multiple networks which comprise at least a second circuit switching network (ISDN) and at least a second packet switching network characterised in that the network node (IN; IN1, IN2, IN3) comprises
- a call routing module (CRM) allowing to select an address or a carrier (n) in a network to which the service call is to be routed according to the setup information, the entries of a routing table and/or environmental conditions such as static network conditions, dynamic network conditions and/or time and date,
- a circuit switch (CS) allowing to switch a service call incoming from the first or the second circuit switching network according to the routing selection either to the second respective first circuit switching network or over an interworking unit (IWU) to the first or to the second packet switching network,
- a packet routing unit (PRU) allowing to route the data packets of a service call incoming from the first or the second packet switching network either to the second respective first packet switching network or over an interworking unit (IWU) and the circuit switch (CS) to the first or to the second circuit switching network.

9. Network node according to claim 8, in which the first networks are
- networks located at customer premises respective
- access networks connecting customer premises equipment (CPE) with at least one carrier central office and
the second networks are
- access networks connecting customer premises equipment (CPE) with at least one carrier central office respective
- wide area networks (WAN) or public switched telephone networks (PSTN).

10. Network node according to claim 8 or 9, in which said interworking unit (IWU) comprises a packet assembler dissembler (PAD)
- said packet assembler dissembler (PAD) allowing
- to transform the data stream, received from a circuit switching network, into a corresponding sequence of data packets which are passed on to the packet routing unit (PRU) and
- to transform a sequence of data packets received from the packet routing unit (PRU) into a continuous data stream which is forwarded over the circuit switch (CS) to a circuit switching network;
- said packet routing unit (PRU) allowing
- to insert data packets received from the packet assembler dissembler (PAD) into a packet stream passing to a packet switching network and
- to extract data packets of service calls to be forwarded from a packet switching network to a circuit switching network out of the packet stream and to pass on the extracted data packets to the packet assembler dissembler (PAD).

11. Network node according to claim 8, 9 or 10, in which the called services are routed between the circuit switching networks and the packet switching networks are transferred according to a protocol implemented in the interworking unit (IWU) such as the protocol specified in ITU-T recommendation H.323 which allows the transfer of signalling and control data over the packet switching network.

12. Network node according to one of the claims 8 to 11, with a system control unit (SCU) which comprises said call routing module (CRM) and which has access
- to the database (DB), the circuit switch (CS) and the packet routing unit (PRU) in order to obtain the setup information of an incoming service call and to provide the corresponding routing instructions and/or
- to the database (DB), the circuit switch (CS) and the packet routing unit (PRU) in order to record call data for accounting purposes of all routed service calls and/or
- to the interworking unit (IWU) in order to provide protocol information for the conversion of the data of the circuit or packet switched traffic and/or
- to the packet assembler dissembler (PAD) in order to provide the required information for the compression / decompression of the transferred data.

13. Network node according to one of the claims 8 to 12, in which the routing profile stored in the database (DB) is controllable by a service provider (SP) in such a way that
- the database (DB) is accessible by the service provider (SP) over at least one carrier (n) of the access network in order to change or read the routing profile or characteristic data belonging to the customer premises equipment (CPE) and
- the network node (IN; IN1, IN2, IN3) is capable to regularly access a master database (M-DB) maintained by the service provider (SP) in order to download update information for its database (DB).

14. Network node according to one of the claims 8 to 13, comprising a by-pass circuit (LL, SW1, SW2) which is used to route circuit switched traffic between the customer premises equipment (CPE) and the access network in case that the network node (IN; IN1, IN2, IN3) does not provide its normal function.

15. Network node according to one of the claims 8 to 14, in which the system control unit (SCU) performs call data record functions for circuit and/or packet switched traffic and stores the resulting data in the database DB.
